# EUROPEAN PATENT APPLICATION

(11) **EP 3 018 077 A1**
(43) Date of publication of application: **11.05.2016**
(21) Application number: 14192335.9
(22) Date of filing: 07.11.2014
(51) Int. Cl.: B65F 1/06, B65F 1/14

(54) **Basket for temporarily storing organic waste such as kitchen waste**

(71) Applicant: The Compost Bag Company, 3020 Herent (BE)
(72) Inventor: Cautereels, Vic,, 2520 Ranst (BE); Vanderlinden, Erik,, 3118 Werchter (BE)
(74) Representative: Gevers Patents

(57) **Abstract**

The basket has a bottom (1) and an upstanding side wall (2) provided with ventilation openings (3). It is composed of two identical halves (4, 5) which are arranged to be mounted onto one another to form the basket. Each of the basket halves (4, 5) comprises a bottom portion, forming one half of the bottom (1) of the basket, and a side wall portion, forming one half of the side wall (2) of the basket. The bottom (1) of the basket is a closed bottom but a seam (10) is present between the two bottom portions. Liquid is prevented from leaking out of the basket through this seam (10) due to the fact that the bottom portions drain from said seam (10) towards the side wall (2) of the basket.

## Description

The present invention relates to a basket suitable for temporarily storing organic waste, in particular kitchen waste, which organic waste is preferably contained in a breathable biodegradable plastic bag lining the basket. The basket itself has a bottom and an upstanding side wall which is provided with ventilation openings.

Organic waste is usually collected and composted in industrial composting installations or it can also be composted in the garden. The use of biodegradable plastic bags has the advantage that they can be composed together with the organic waste contained therein. The basket is especially intended to collect and temporarily store organic waste in the kitchen, i.e. kitchen waste which consists mainly of food waste. The basket therefore has a relatively small volume. A problem with storing kitchen waste in a relatively hot and humid environment is that it quickly starts to rot and get mouldy. As described in US 8 241 716 this process can be slowed down by using plastic bags which are breathable, i.e. permeable to water vapour. Both the side walls and the bottom of the baskets lined with these plastic bags are provided with ventilation openings. In this way water can evaporate from the organic waste contained in the bags so that its weight is reduced and so that it is less prone to rotting processes.

A problem with the prior art baskets disclosed in US 8 241 716 is that they are not suited for storing the organic waste in the kitchen itself. Indeed, the water evaporating through the breathable plastic bag will produce a condensate onto the inner surface of the basket and will leak through the openings onto the surface of the worktop or kitchen cabinet onto which the basket is placed. This problem is even worse when the plastic bag starts leaking the dirty liquid coming out of the organic waste. This may happen in particular at the seal closing off the bottom of the bag. Biodegradable plastics are indeed much more difficult to seal than synthetic plastics, such as polyethylene plastics, so that leaks occur much more often.

A problem with baskets is further that they occupy a lot of space during transport and especially also in the store. Due to the relatively large volume of the basket, the shelf space in the store is quite expensive compared to the price of the basket. In practice, baskets are therefore often made conical, i.e. with a smaller bottom and a larger opening, so that they can be nested into one another. A larger opening requires however a larger and therefore more expensive bag and the basket occupies also a larger space in the kitchen cabinet. Moreover, in case only one or a few baskets are put onto the shelf in a store, they still occupy a relatively large amount of space. A further drawback is that when the baskets are provided with a lid, the lids have to be stored separately which causes logistic problems for supplying always the correct number of lids.

An object of the present invention is therefore to provide a basket which can be packaged so as to occupy less space during transport and storage in a store, especially when stored individually, and which can thus be packaged individually.

A further object is to provide a basket which can packaged individually without taking in much space and which obviates the problem that liquid may leak through its bottom out of the basket notwithstanding the fact that the bottom of the basket consists of two adjoining bottom portions.

In a first aspect of the invention, the basket is characterised in that the basket is composed of two identical halves which are arranged to be mounted onto one another to form the basket and each of which comprises a bottom portion, forming one half of the bottom of the basket, and a side wall portion, forming one half of the side wall of the basket, the basket being contained in a packaging with the two halves of the basket nested into one another with an outer surface of the side wall portion of one half of the basket resting onto an inner surface of the side wall portion of the other half of the basket.

By making the basket of two halves which can be nested into one another, a compact structure can be obtained so that each of the baskets can be packaged individually, in their pre-assembled state, without occupying too much storage space. Producing the basket in two halves requires moreover only one single moulding apparatus since both halves are completely identical. When producing or packaging the baskets, the number of each of the basket halves is also always correct since both halves are identical. The basket halves can be wrapped for example in plastic foil or they can be packaged in a box, for example in a cardboard box.

A garbage container, which shows no ventilation openings in contrast to the basket of the present invention, but which also consists of two identical halves is already disclosed in US 6 283 321. This known garbage container is however assembled during the production thereof, i.e. before being packaged. The container is conical so that a number of them can be nested into one another during transport and storage. No lids are provided which could cause logistic problems since they would be too large to be stored in the containers themselves, especially when a number of them are nested into one another.

Preferably, the basket according to the present invention does comprise a lid which is placed in the basket half which rests onto the inner surface of the other basket half and which is also contained in said packaging.

A lid is very advantageous to reduce the escape of bad smells out of the basket and also to hide the organic matter contained in the basket from view. An advantage of the basket according to the present invention is that the lid can be placed in the space provided by the two basket halves so that it does not require any additional storage space or a larger packaging for the basket. By placing the lid in the same packaging, the available space within the packaging is more efficiently used.

In a further preferred embodiment, said packaging additionally contains at least one roll of breathable biodegradable plastic bags arranged for lining an inner surface of the basket, said roll being placed in the basket half wherein the lid is placed.

When placing the lid into the upper basket half, there is still some free space which can be used for storing one or even more rolls of plastic bags. The available space within the packaging is thus even more efficiently used. The value of the basket, lid and plastic bags contained in the packaging is thus higher which is important in view of the storage space required by the packaged basket.

In a second aspect of the invention, the basket is characterised in that the bottom of the basket is a closed bottom and the basket is composed of two identical halves which are arranged to be mounted onto one another to form the basket and each of which comprises a bottom portion, forming one half of the bottom of the basket, and a side wall portion, forming one half of the side wall of the basket, the bottom portions of the two halves of the basket forming a seam and draining from said seam towards the side wall of the basket in the mounted position of the two halves of the basket.

As explained hereabove, an advantage of a basket composed of such two identical halves is that it can be stored and packaged in a compact way in its pre-assembled state, it requires only one mould to produce both mould halves and the correct number of each of the mould halves is always available since both mould halves are identical.

A garbage container which consists of two identical halves is already disclosed in US 6 283 321. This container is however not suited for being lined with a breathable biodegradable plastic bag. It is intended to be lined with a polyethylene bag which is not breathable. It is therefore also not provided with ventilation openings. A drawback of the container disclosed in this US patent is that the two container halves form a seam dividing the bottom of the container in two halves. When liquid leaks out of the bag, this liquid can flow through this seam out of the container.

In the basket according to the second aspect of the invention, any condensed water or liquid leaking out of the plastic bag in the basket is prevented from flowing out of the basket. This is achieved by giving the bottom of the basket such an inclination that the bottom portions of both basket halves drain, in the assembled state of the basket and with the basket being placed on a horizontal flat surface, towards the side wall portions of both basket halves. An advantage of this solution is that it is simple and that no seals need to be applied in the seams, which would be more costly and less reliable.

In a preferred embodiment of the basket according to the invention, the bottom of the basket has an upper surface provided with ribs, which ribs extend from the side wall of the basket towards said seam and have preferably a thickness which decreases towards said seam and preferably a height which decreases also towards said seam.

The ribs support the bag which is placed in the basket so that the bottom of the bag remains dry and does not drip water on the floor when removed from the basket. When the thickness of the ribs decreases towards the seam, the basket half can be moulded in a transverse direction so that no slides have to be provided in the mould for producing the required ventilation openings in the side wall.

In a further preferred embodiment, the basket is indeed produced in an injection mould which comprises a male and a female mould part, which injection mould is opened by moving the male mould part in a direction which is substantially parallel to the inner surface of said bottom away from said female mould part.

In an advantageous embodiment of the basket according to the invention, the side wall portions of the basket halves are curved, in particular substantially in accordance with an arc of a circle, and have two opposite free edges, a straight line connecting an inner surface of the side wall portion at these two free edges having a length which is more than double the largest distance measured in a direction perpendicular to said straight line between this straight line and the inner surface of said wall portion, said length being preferably larger than 210%, more preferably larger than 230% and most preferably larger than 250% of said largest distance.

This embodiment enables to nest both basket halves to a large extend into one another, even when the wall portions have a considerably thickness, for example because they mainly consist of vertical ribs, separated by free spaces, which have to be quite thick to provide the necessary strength to the side wall.

In a preferred embodiment of the basket according to the invention, the side wall portions of the basket halves comprise indeed preferably upstanding ribs, more preferably vertical ribs, which have an elongated horizontal cross-section with a width decreasing towards said seam. The side wall portions more particularly consist preferably mainly of the upstanding ribs, which are preferably connected to one another by transverse connection elements.

In another preferred embodiment of the basket according to the invention, the bottom portions of both basket halves are each provided with at least one male connector and at least one female connector, the male connectors cooperating with the female connectors to connect both basket halves when they are mounted onto one another, the male and female connectors providing preferably a snap-fit connection.

In this embodiment, the two basket halves can be connected to one another by means of the male and female connectors which are provided onto the basket halves themselves when moulding them. No separate connector elements are thus required, in contrast to the garbage container disclosed in US 6 283 321, the two halves of which have to be connected to one another by means of two separate caps and by means of a ring applied around the opening of the container. These separate connector elements increase the costs of the container and can also get lost.

Other particularities and advantages of the invention will become apparent from the following description of a particular embodiment of the basket according to the present invention. The reference numerals used in this description relate to the annexed drawings wherein:
Figure 1 is a perspective view on a basket according to a particular embodiment of the present invention, which basket comprises two handles and a lid;
Figure 2 is a front elevational view on the basket illustrated in Figure 1;
Figure 3 is a side elevational view on the basket illustrated in Figure 1;
Figure 4 is an exploded view on the basket illustrated in Figure 1;
Figure 5 is an enlarged view of a detail of Figure 4;
Figure 6 is a perspective view as Figure 1 but with the lid and the handles of the basket removed;
Figure 7 is a front elevational view on the basket with the lid and the handles removed;
Figure 8 is a side elevational view on the basket with the lid and the handles removed;
Figure 9 is a perspective view on one of the basket halves illustrated in Figure 1;
Figure 10 is a front elevational view on the basket half illustrated in Figure 9;
Figure 11 is a side elevational view on the basket half illustrated in Figure 9;
Figure 12 is a partial horizontal cross-sectional view according to arrows XII-XII in Figure 10;
Figure 13 is a top plan view on the basket half illustrated in Figure 9;
Figure 14 is an enlarged view on the bottom of the two basket halves before being assembled;
Figure 15 is a same view as Figure 14 but with the two basket halves in their assembled state;
Figure 16 is a perspective view on the basket in its pre-assembled state, more particularly in its most compact state, with the two basket halves nested into one another and the lid placed in the uppermost basket halves;
Figure 17 is a perspective view on a basket according to the present invention wherein an alternative embodiment of the male and female connectors is provided between the bottom portions of the two basket halves; and
Figure 18 is, on a larger scale, a perspective view of the alternative male and female connectors.

The present invention relates to a basket which is suitable for temporarily storing organic waste, in particular kitchen waste. Kitchen waste may contain in particular not only raw vegetable materials but also cooked food which is quite prone to decay by bacteria and fungi, especially when stored at room temperature and under relatively humid conditions. These warm and humid conditions prevail in the plastic bag wherein the organic waste is contained and which lines the inner surface of the basket. The plastic bag is preferably biodegradable so that the bag does not have to be emptied before composting the organic waste. In the present description biodegradable means biodegradable according to the EN 13432:2000 standard.

The plastic bag is preferably also breathable, i.e. made of a breathable plastic material, so that interior of the bag becomes less humid. The breathability of the plastic material is to be determined by measuring the permeability to water vapour of a 30 µm film of the plastic material according to ASTM E 96-90. This permeability is preferably higher than 400 g 30 µm/m² 24 h, more preferably higher than 700 g 30 µm/m² 24 h and most preferably higher than 950 g 30 µm/m² 24 h. The thickness of the foil from which the bag is made is preferably comprised between 5 and 50 µm, and more preferably between 10 and 40 µm, for example 12 to 14 µm.

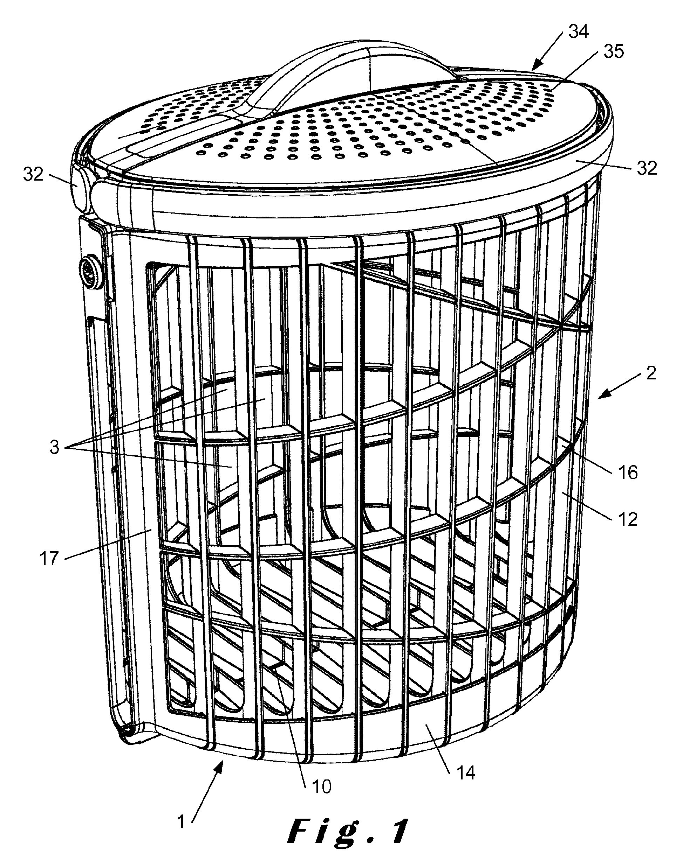

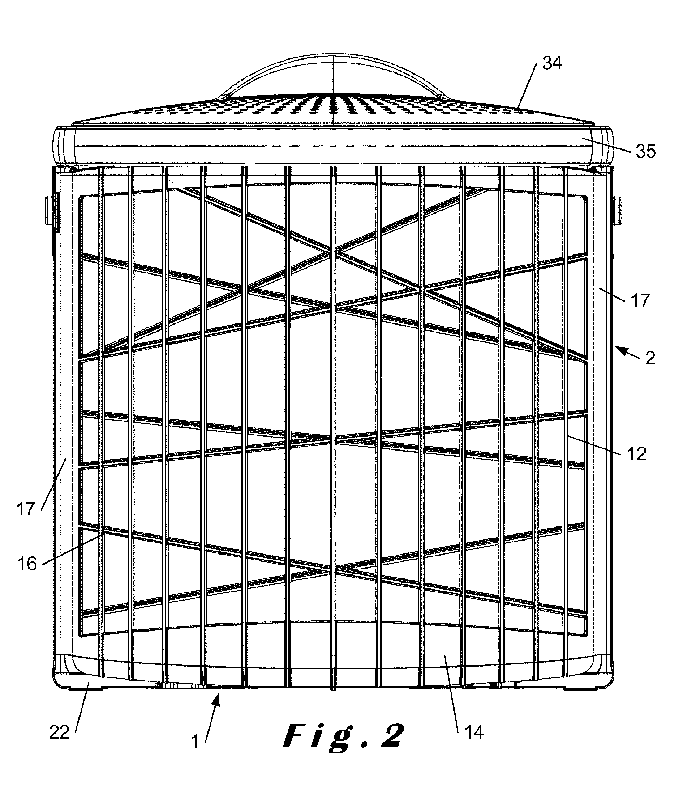

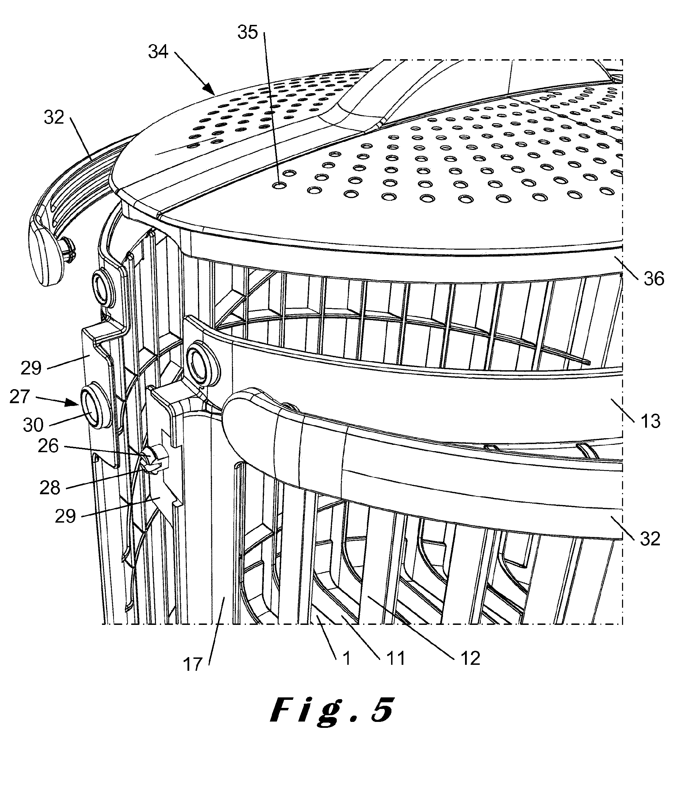

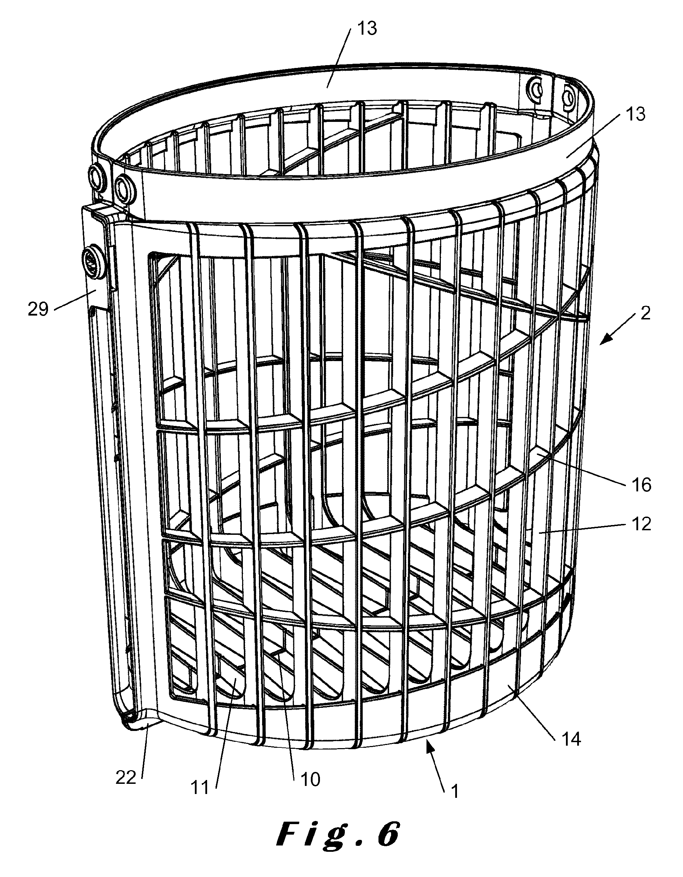

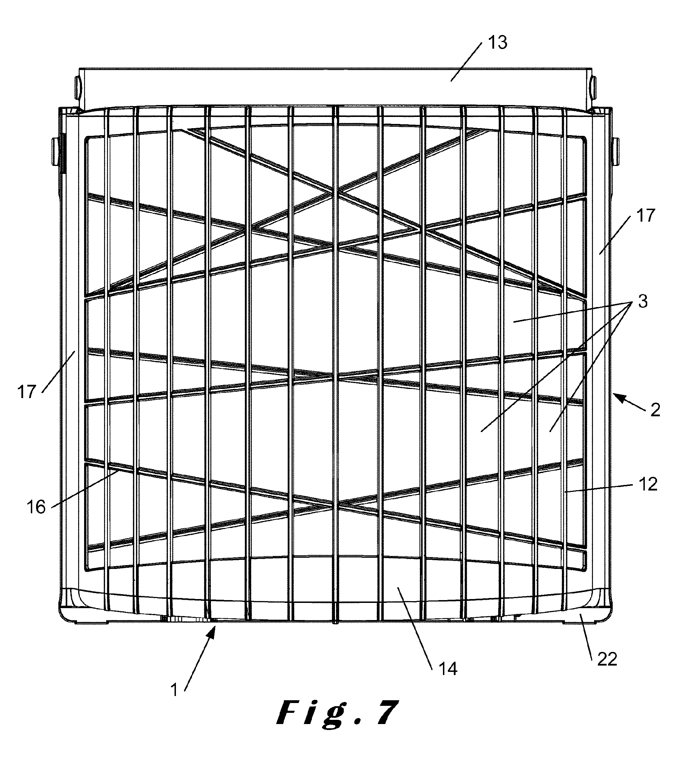

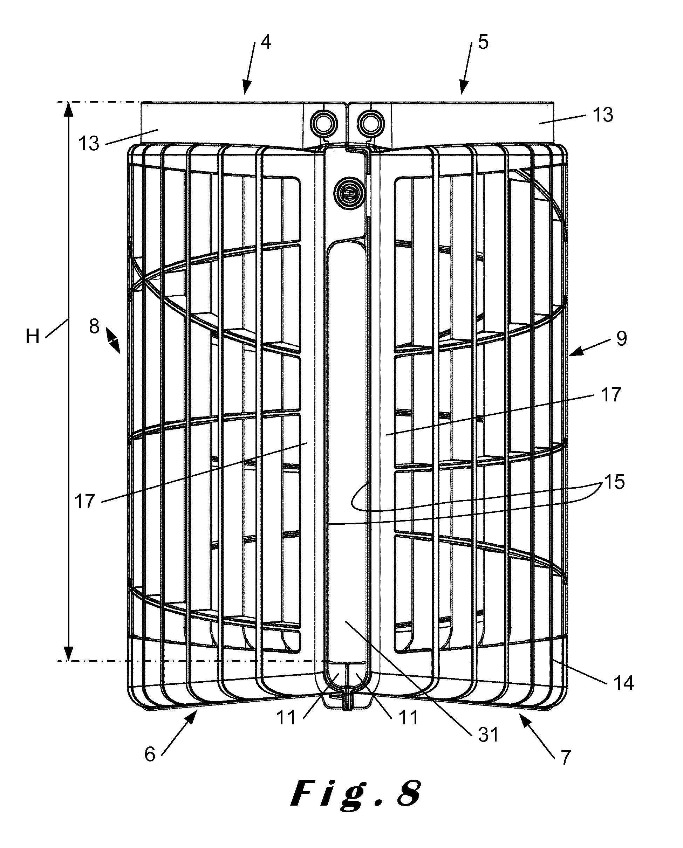

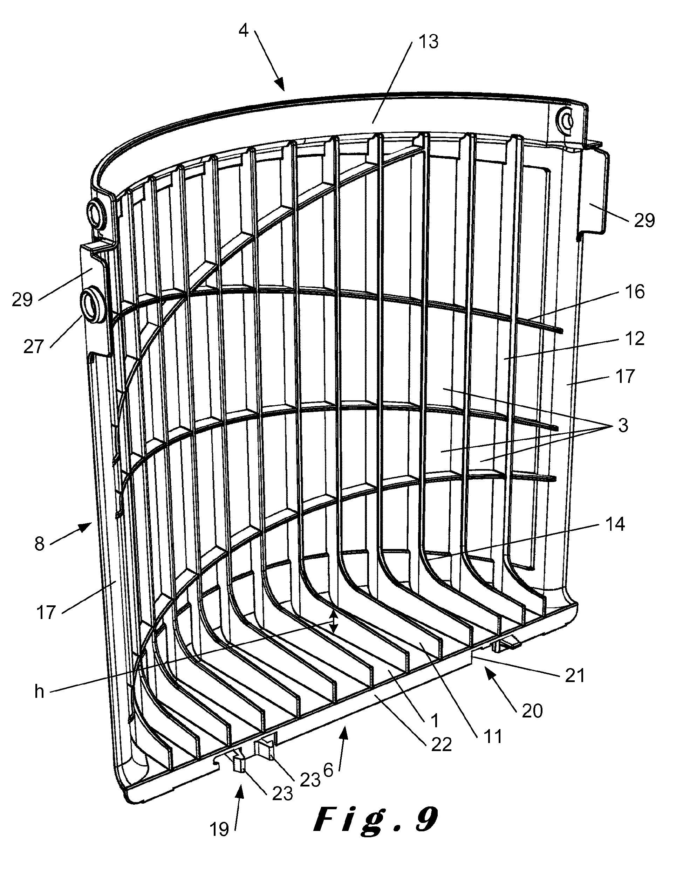

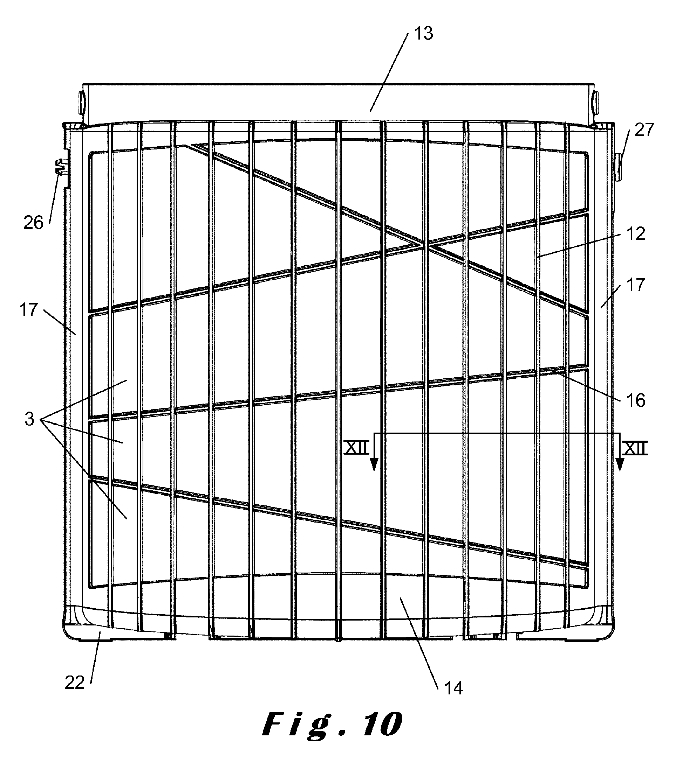

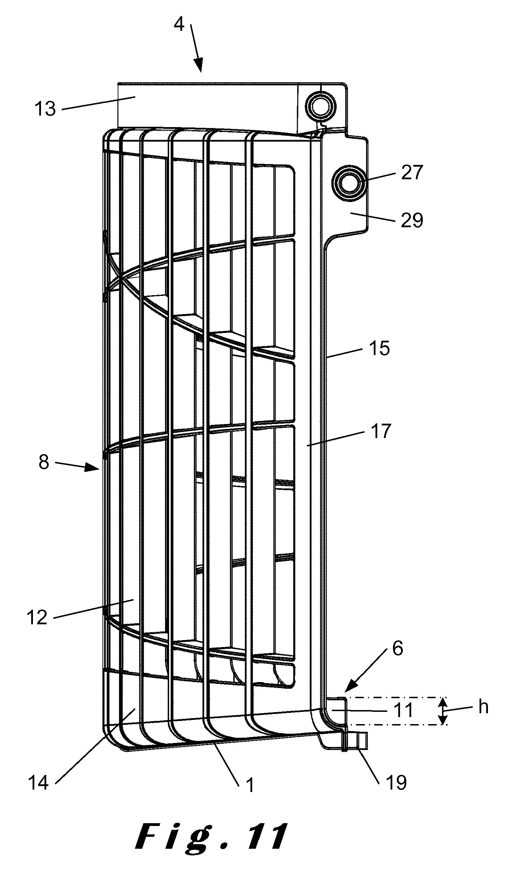

An example of the basket according to the invention is shown in Figures 1 to 16. The basket has a bottom 1 and an upstanding side wall 2. In order to allow water vapour to escape out of the bag and the basket, the side wall 2 of the basket is provided with ventilation openings 3. The bottom 1 of the basket is however a closed, which means that it is not provided with openings through which water can flow out of the basket. This is important since the basket according to the present invention is in particular intended to be placed on the worktop of the kitchen or in a kitchen cabinet so that no liquid may flow out of the basket. This water may comprise condensed water and also liquid which may leak out of the bag in particular in case the bottom seal of the bag is broken. This bottom seal is often a double seal since biodegradable plastics are difficult to seal.

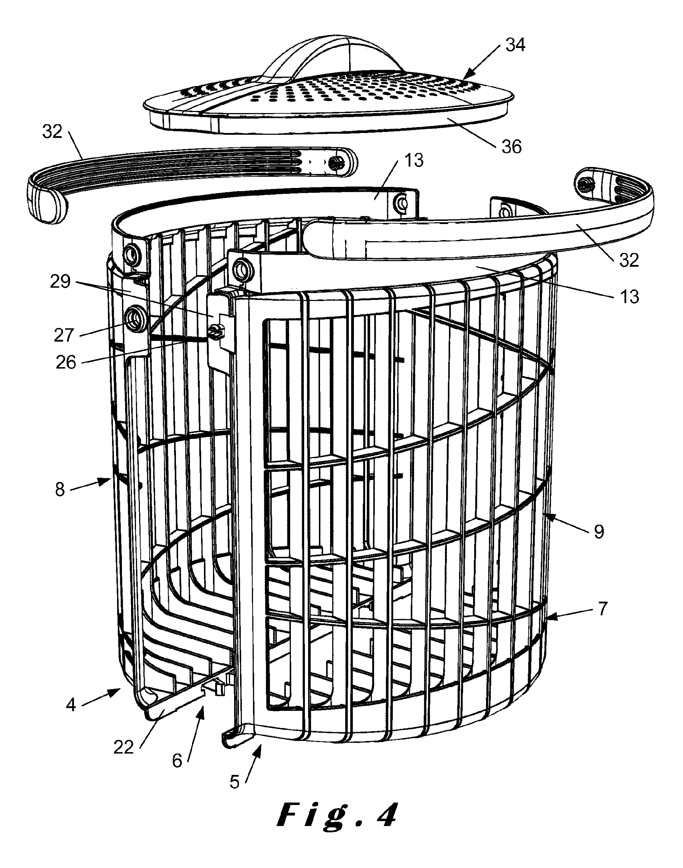

In order to reduce the manufacturing costs and to avoid logistic problems, the basket according to the present invention is made of two identical basket halves 4, 5 (see for example Figure 4). Each of these basket halves 4, 5 comprise a bottom portion 6, 7, which forms one half of the bottom 1 of the basket, and a side wall portion 8, 9, which forms one half of the side wall 2 of the basket. In the assembled position of the basket, the bottom portions 6, 7 of the two basket halves 4, 5 form a seam 10 (see for example Figures 1, 3 and 15).

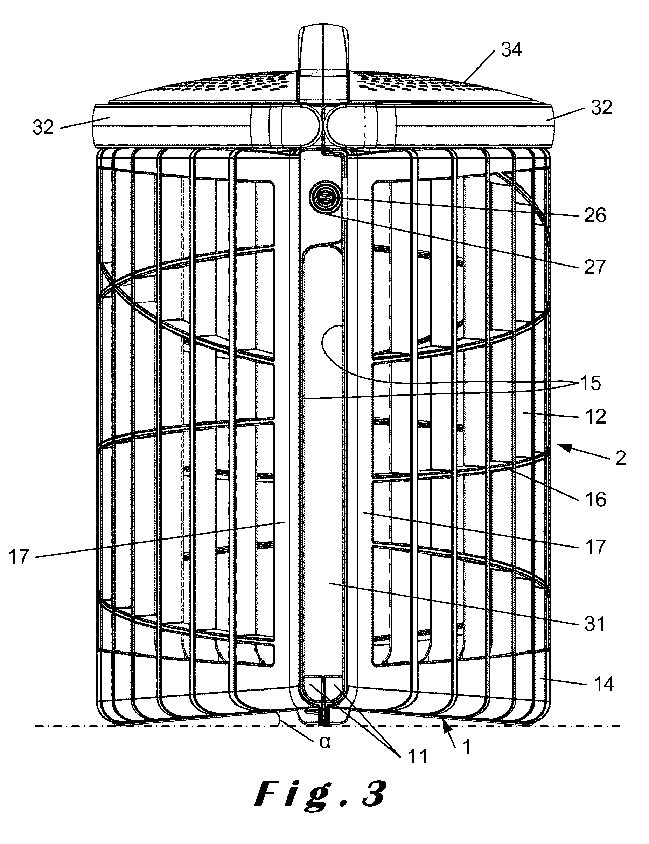

As can clearly be seen in Figures 3, 8 and 11, the bottom portions 6, 7 of both basket halves 4, 5 drain from the seam 10 towards the side wall portions 8, 9 of the basket halves 4, 5 when the assembled basket is placed on a horizontal flat surface. The bottom portions 6, 7 are in particular formed by a flat surface that forms an angle α (see Figure 3) with the horizontal surface. The angle α is preferably larger than 1°, preferably larger than 2° and more preferably larger than 3° but smaller than 45°, preferably smaller than 20° and more preferably smaller than 10°.

At the bottom 1 of the basket, the side wall 2 is closed, i.e. it is formed by a closed side wall portion 14 which is free of openings, so that any liquid flowing towards the side wall 2 is collected in the lowest area near the side wall 2 and is thus prevented from flowing out of the basket.

On its upper surface, the bottom 1 of the basket is provided with ribs 11. These ribs 11 extend from the side wall 2 of the basket towards the seam 10 between both bottom halves 6, 7 so that any liquid which flows or leaks onto the bottom 1 can flow along the ribs 11 away from the seam 10 towards the side wall 2 of the basket. The ribs 11 are intended to support the bag applied in the basket so that the bag doesn't hamper the flow of liquid on the upper surface of the bottom 1. Moreover, air can circulate between the bottom 1 of the basket and the bag to keep the bag dry. The ribs 11 have preferably a height h which increases from the seam 10 towards the side wall 2 of the basket so that the upper edges of the ribs 11 are substantially situated in a horizontal plane when the basket is placed on a horizontal surface.

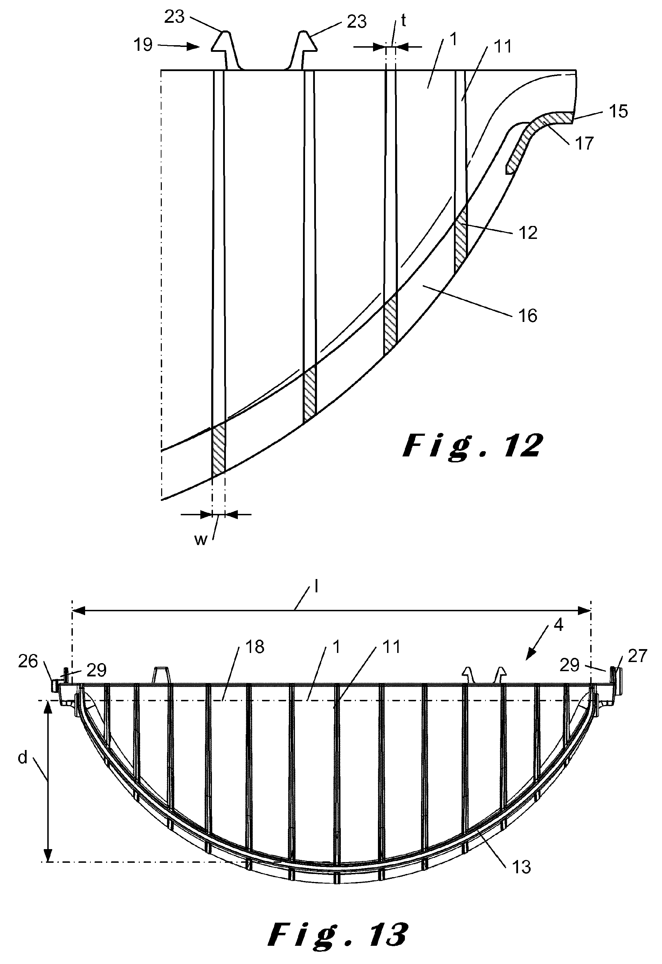

The side wall portions 8, 9 are curved, in particular substantially in accordance with an arc of a circle. They have two opposite free edges 15 and are curved in such a manner that a straight line 18 (see Figure 13) connecting an inner surface of the side wall portion 8, 9 at these two free edges 15 has a length I which is more than double the largest distance d measured in a direction perpendicular to said straight line 18 between this straight line 18 and the inner surface of said side wall portion 8, 9. The length l is preferably larger than 210%, more preferably larger than 230% and most preferably larger than 250% of said largest distance d. In the basket illustrated in the drawings, the straight line 18 has a length I of about 225 mm whilst the largest distance d between this straight line 18 and the inner surface of the side wall portion 8, 9 is equal to about 72 mm (the largest distance between the inner surface of the side wall and the seam between both basket halves being equal to about 80 mm).

The ribs 11 on the bottom 1 extend preferably substantially at right angles to the straight line 18.

The side wall portions 8, 9 also comprise upstanding ribs 12, in particular vertical ribs. These ribs 12 are separated by open gaps forming the ventilation openings 3. The side wall 2 of the basket is mainly formed by the upstanding ribs 12. Only at the top, the upstanding ribs 12 are connected to a rim portion 13 forming the upper edge of the basket and at the bottom the upstanding ribs 12 are connected to the closed side wall portion 14. Adjacent ribs 12 are further mutually connected by connecting elements 16, which are preferably also in the form of ribs which extend transversally to the upstanding ribs 12. Finally, at their two opposite free edges 15, the side wall portions 8, 9 of the basket halves 4, 5 comprise vertical edge portions 17. The upstanding ribs 12 are in other words contained in a frame formed by the upper rim portion 13, the closed side wall portion 14 adjacent the bottom 1 and the two vertical edge portions 17.

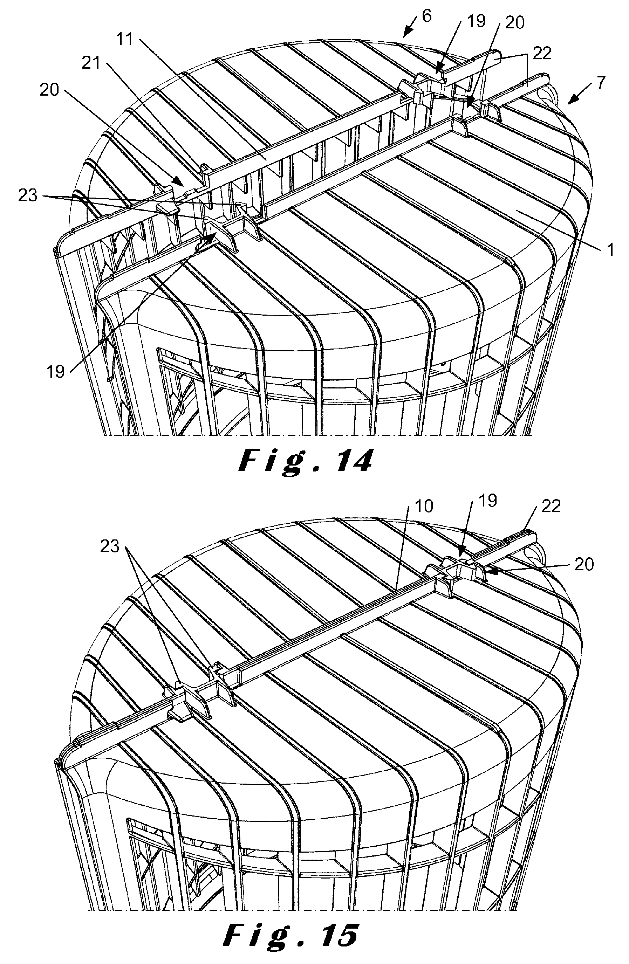

In order to be able to mount the two basket halves 4, 5 onto one another, i.e. in order to be able to assemble the basket, the bottom portions 6, 7 of both basket halves 4, 5 are each provided with at least one male connector 19 and at least one female connector 20. When assembling the basket, the male connector 19 on the bottom portion 6 cooperates with the female connector 20 on the other bottom portion 7 and the female connector 20 on the bottom portion 6 cooperated with the male connector 19 on the other bottom portion 7. As can be seen in Figure 14, the female connectors 20 consist for example of a hole or recess 21 in a downward rim 22 at the free edge of the bottom portions 6, 7 whilst the male connectors 19 consist for example of two hook-shaped resilient elements 23, which project from the downward rim 22 and which can snap through the hole or recess 21 behind the downward rim 22 of the other bottom portion. The male and female connectors thus provide a snap fit connection. In this way, the basket halves 4, 5 can be connected easily to one another by simply pushing the male connectors 19 into the female connectors 20. This snap-fit connection requires no separate connector parts.

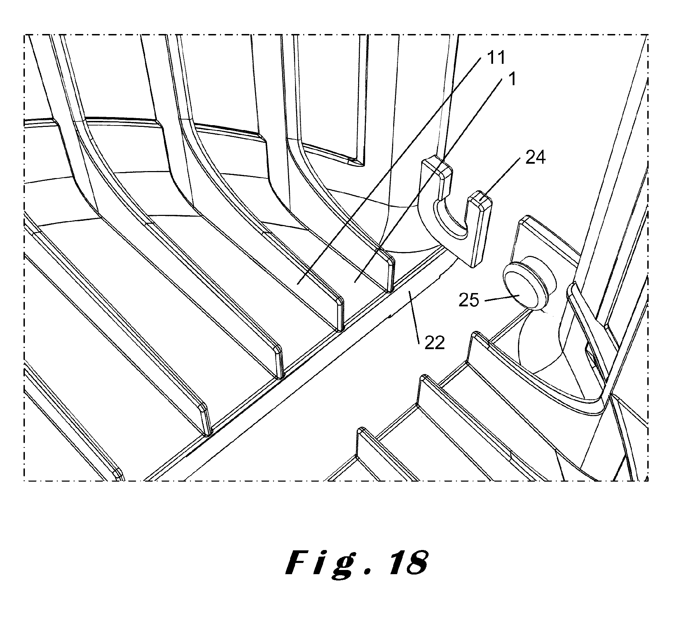

In an alternative embodiment, illustrated in Figure 18, the female connectors 20 can be formed by a U-shaped element 24 which projects from one of the free edges 15 of the side wall portions 8, 9, and from the bottom portions 6, 7 whilst the male connectors 19 can be formed by a knob 25 which is fixed to the other free edge 15 of the side wall portions 8, 9 and which can be slid by a relative vertical movement of the basket halves 4, 5 into the U-shaped element 24.

Near the top of the basket, the side wall portions 8, 9 are each provided with at least one further male 26 and at least one further female connector 27, the further male and female connectors being in particular each provided on a support element 29 projecting from the free edges 15 of the side wall portions 8, 9. The male connector 26 comprises one knob 28 which projects outwards from the side wall portion 8, 9 whilst the female connector 27 is formed by a hole 30 in the support element 29. The knob 28 comprises two resilient hook-shaped elements which snap behind the support element 29 when the knob 28 is pushed through said hole 30. Two snap-fit connections are thus achieved not only at the bottom of the basket but also at the top thereof.

An advantage of the basket according to the invention is that it can be produced in an easy way by injection moulding in an injection mould. Only one mould is required since both basket halves 4, 5 are identical. Moreover, the basket halves 4, 5 can be moulded in a transverse direction so that no slides, which are quite expensive, need to be provided in the mould for producing the ventilation openings in the side wall portions 8, 9. The basket halves 4, 5 can indeed be produced in an injection mould which comprises a male and a female mould part and which is opened by moving the male mould part in a direction which is substantially parallel to the upper surface of the bottom 1 of the basket away from the female mould part. The direction wherein the mould is opened is parallel to the ribs 11 on the bottom.

The direction wherein the mould is opened is parallel to the ribs 11 on the bottom 1. To enable this opening movement, these ribs 11 have a thickness t which decreases slightly from the side wall 2 towards the seam 10 to provide a draft angle which makes removing the male mould part from the injection mould easier. This draft angle is preferably equal to or larger than 0.5°.

The upstanding ribs 12 of the side wall 2 preferably have an elongated horizontal cross-section, which can be seen in Figure 12. The longest dimension of this cross-section is directed towards the seam 10, and forms in other words an angle with the plane of the side wall in order to achieve an optimal strength. The width w of this cross-section decreases towards the seam 10 so as to provide a draft angle which makes withdrawing of the male mould part easier. This draft angle is preferably also equal to or larger than 0.5°.

An advantage of being able to mould the basket halves 4, 5 in a transverse direction is that the basket itself does not have to be conical to be able to demould the basket along its longitudinal axis. To make optimum use of the space occupied by the basket, and also to enable the use of bags which fit optimally into the basket, the basket preferably has an inner horizontal cross-sectional area, delimited by the inner surface of its side wall, which is substantially constant over the height H of the basket.

In the basket illustrated in the drawings, ventilation openings 3 are also provided in the area of the transition between the two basket halves 4, 5. When moulding these halves transversally, slides would be required in the mould to provide ventilation openings in the side wall portions 6, 7 at the free edges 15 thereof since at these free edges the side wall portions 6, 7 extend in the direction wherein the basket halves 4, 5 are to be demoulded. To avoid the use of such slides, the two opposite free edges 15 of the side wall portions 8, 9 of the basket halves 4, 5, or in other words the edge portions 17 of these side wall portions 8, 9, are situated on a distance from the seam 10 between the two bottom portions 6, 7 so that, in the mounted position of the two basket halves 4, 5, two opposite gaps 31 remain between the free edges 15 of the side wall portions 8, 9. As can be seen for example in Figure 3, these gaps 31 form additional ventilation openings in the basket.

In use, a breathable biodegradable bag is arranged in the basket for temporarily storing the organic waste. This bag is supported by the bottom 1, more particularly by the ribs 11 provided thereon, and by the side wall 2. At the top, the bag can be folded over the upper edge of the basket, more particularly over the rim portions 13 of the side wall portions 8, 9.

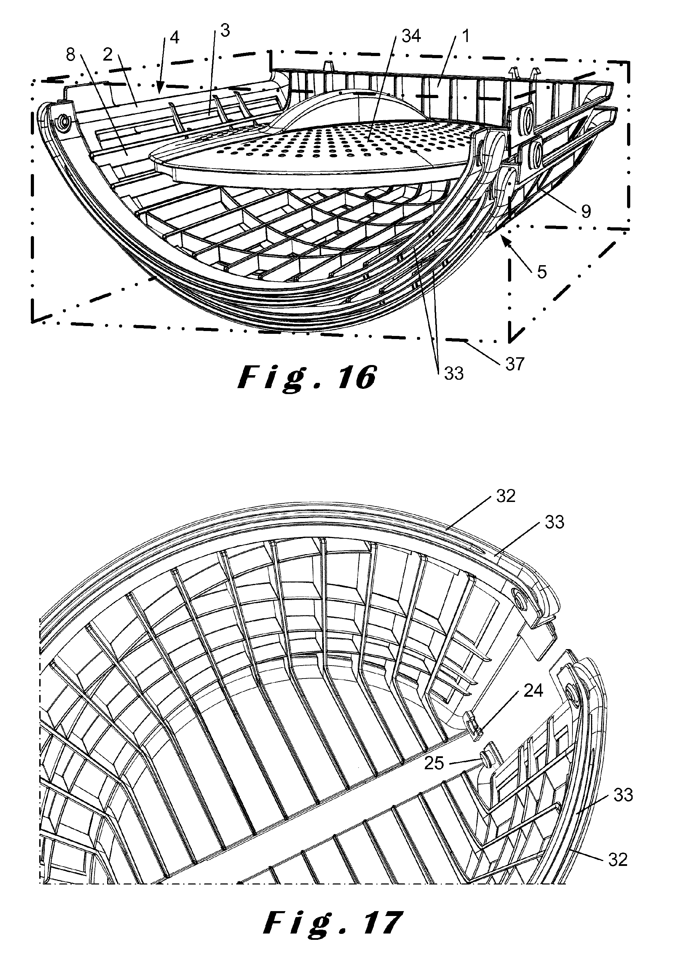

In the embodiment illustrated in the drawings, two handles 32 are hingedly attached to the rim portions 13. These handles 32 can be raised to be able to carry the basket. In their lowered position, they extend around the rim portions 13 of the side wall with only a small gap 33 (see Figure 16) remaining between these rim portions 13 and the handles 33. These small gaps 33 are intended to receive the edge portion of the bag which is folded over the rim portions 13. The top of the bag is thus clamped between the handles 33 and the side wall 2 of the basket.

The basket illustrated in the drawings has a height H, measured from the top of the ribs 11 on the bottom 1, of about 230 mm. The basket therefore has an inner volume of about 5.8 litres. This inner volume is preferably smaller than 10, more preferably smaller than 9 and most preferably smaller than 8 litres, but preferably larger than 3, more preferably larger than 4 and most preferably larger than 5 litres.

The basket illustrated in the drawings comprises also a lid 34 provided with relatively small ventilation openings 35 so that the organic waste cannot, or almost not, be seen through the lid 34. On its bottom side, the lid 34 has a flange 36 which fits into the opening of the basket. When a bag is applied in the basket, this flange 36 urges the upper edge of the bag against the inner surface of the upper rim portion 13 of the side wall 2 of the basket.

An advantage of the basket according to the invention is that it can be packaged individually in a compact way. This is illustrated in Figure 16. The two basket halves 4, 5 can be nested into one another with an outer surface of the side wall portion 8 of one basket half 4 resting onto the inner surface of the side wall portion 9 of the other basket half 5. The basket can thus be contained in a packaging, for example a rectangular box 37, which is illustrated only schematically, in dashed line, in Figure 16. The lid 34 of the basket is placed in the basket half 4 which rests onto the inner surface of the other basket half 5 and is thus also contained in said packaging 37. As can be seen in Figure 16, some free space is still available in the upper basket half 4, which free space is preferably used to store one or more rolls of breatable biodegradable plastic bags which are arranged for lining the inner surface of the basket before applying the organic waste therein and which can thus be sold simultaneously with the basket without requiring any additional storage or shelf space.

From the above given description of a specific embodiment of the basket according to the present invention it will be clear that several modifications can be applied thereto without departing from the scope of the attached claims.

The basket can be made for example from different thermoplastic materials which can be injection moulded, such as for example from polypropylene.

## Claims

1. A basket suitable for temporarily storing organic waste, in particular kitchen waste, which organic waste is preferably contained in a breathable biodegradable plastic bag lining the basket, which basket has a bottom (1) and an upstanding side wall (2) which is provided with ventilation openings (3),
**characterised in that**
the bottom (1) of the basket is a closed bottom and the basket is composed of two identical halves (4, 5) which are arranged to be mounted onto one another to form the basket and each of which comprises a bottom portion (6, 7), forming one half of the bottom (1) of the basket, and a side wall portion (8, 9), forming one half of the side wall (2) of the basket, the bottom portions (6, 7) of the two halves (4, 5) of the basket forming a seam (10) and draining from said seam (10) towards the side wall (2) of the basket in the mounted position of the two halves (4, 5) of the basket.

2. A basket according to claim 1, **characterised in that** the side wall (2) of the basket is closed at the bottom (1) of the basket to prevent any liquid draining towards said side wall (2) to flow out of the basket.

3. A basket according to claim 1, or 2, **characterised in that** the bottom (1) of the basket has an upper surface provided with ribs (11), which ribs (11) extend from the side wall (2) of the basket towards said seam (10) and have preferably a thickness (t) which decreases towards said seam (10) and preferably also a height (h) which decreases towards said seam (10).

4. A basket according to any one of the claims 1 to 3, **characterised in that** said side wall portions (4, 5) are curved, in particular substantially in accordance with an arc of a circle, and have two opposite free edges (15), a straight line (18) connecting an inner surface of the side wall portion (8, 9) at these two free edges (15) having a length (l) which is more than double the largest distance (d) measured in a direction perpendicular to said straight line (18) between this straight line (18) and the inner surface of said side wall portion (8, 9), said length (I) being preferably larger than 210%, more preferably larger than 230% and most preferably larger than 250% of said largest distance (d).

5. A basket according to claims 3 and 4, **characterised in that** said ribs (11) extend substantially at right angles to said straight line (18).

6. A basket according to any one of the claims 1 to 5, **characterised in that** said side wall portion (8, 9) comprises upstanding ribs (12), preferably vertical ribs (12), which have an elongated horizontal cross-section with a width (w) decreasing towards said seam (10).

7. A basket according to any one of the claims 1 to 6, **characterised in that** it has an inner horizontal cross-sectional area, delimited by the inner surface of said side wall (2), which is substantially constant over the height (H) of the basket.

8. A basket according to any one of the claims 1 to 7, **characterised in that** said side wall portions (8, 9) have two opposite free edges (15), at least one of which is situated on a distance from said seam (10) so that, in the mounted position of the two halves (4, 5) of the basket, two opposite gaps (31) remain between the free edges (15) of the side wall portions (8, 9) of these two basket halves (4, 5).

9. A basket according to any one of the claims 1 to 8, **characterised in that** it is produced in an injection mould which comprises a male and a female mould part, which injection mould is opened by moving the male mould part in a direction which is substantially parallel to the upper surface of said bottom (1) away from said female mould part.

10. A basket according to any one of the claims 1 to 9, **characterised in that** the bottom portions (6, 7) of both basket halves (4, 5) are each provided with at least one male connector (19) and at least one female connector (20), the male connectors (19) cooperating with the female connectors (20) to connect both basket halves (4, 5) when they are mounted onto one another, the male and female connectors providing preferably a snap-fit connection.

11. A basket according to any one of the claims 1 to 10, **characterised in that** the side wall portions (8, 9) of both basket halves (4, 5) each have two opposite free edges (15), the side wall portions (8, 9) being each provided at said free edges (15) near the top of the basket with at least one further male connector (26) at one free edge (15) and at least one further female connector (27) at the other free edge (15), the further male connectors (26) cooperating with the further female connectors (27) to connect both basket halves (4, 5) when they are mounted onto one another, the further male and female connectors providing preferably a snap-fit connection.

12. A basket according to any one of the claims 1 to 11, **characterised in that** the two basket halves (4, 5) are mounted onto one another and a breathable biodegradable plastic bag is arranged in the basket for temporarily storing said organic waste in the plastic bag supported by the bottom (1) and side wall (2) of the basket.

13. A basket according to any one of the claims 1 to 12, **characterised in that** the basket has an inner volume which is smaller than 10, preferably smaller than 9 and more preferably smaller than 8 litres but which is larger than 3, preferably larger than 4 and more preferably larger than 5 litres.

14. A basket, in particular a basket according to any one of the claims, which basket is suitable for temporarily storing organic waste, in particular kitchen waste, which organic waste is preferably contained in a breathable biodegradable plastic bag lining the basket, and which basket has a bottom (1) and an upstanding side wall (2) which is provided with ventilation openings (3),
**characterised in that**
the basket is composed of two identical halves (4, 5) which are arranged to be mounted onto one another to form the basket and each of which comprises a bottom portion (6, 7), forming one half of the bottom (1) of the basket, and a side wall portion (8, 9), forming one half of the side wall (2) of the basket, the basket being contained in a packaging (37) with the two halves (4, 5) of the basket nested into one another with an outer surface of the side wall portion (8) of one half (4) of the basket resting onto an inner surface of the side wall portion (9) of the other half (5) of the basket.

15. A packaged basket according to claim 14, **characterised in that** the basket comprises a lid (34) which is placed in the basket half (4) which rests onto the inner surface of the other basket half (5) and which is also contained in said packaging (37).

16. A packaged basket according to claim 15, **characterised in that** said packaging (37) additionally contains at least one roll of breathable biodegradable plastic bags arranged for lining an inner surface of the basket, said roll being placed in the basket half (4) wherein the lid (34) is placed.
